# EUROPÄISCHE PATENTSCHRIFT

(11) **EP 0 313 774 B1**
(45) Veröffentlichungstag und Bekanntmachung des Hinweises auf die Patenterteilung: **18.05.1994**
(21) Anmeldenummer: 88114501.5
(22) Anmeldetag: 06.09.1988
(51) Int. Cl.: E21D 20/02, B29C 31/06, B65D 81/32

(54) **Vorrichtung zum Lagern und Fördern zweier erst bei bestimmungsgemässem Endverbrauch zu mischender Komponenten**
Dual storing and transporting unit for two separated components of a two-component mixture
Dispositif pour entreposer et convoyer deux composantes destinées à être mélangées seulement lors de l'utilisation finale

(30) Priorität: 29.10.1987 DE 3736641
(43) Veröffentlichungstag der Anmeldung: 03.05.1989
(73) Patentinhaber: Löber, Jürgen, D-59229 Ahlen (DE); Werner-Prösch, Detlef, D-59227 Ahlen (DE)
(72) Erfinder: Parciany, Johann, W-4730 Ahlen (DE)
(74) Vertreter: Patentanwälte Meinke, Dabringhaus und Partner

(56) Entgegenhaltungen:
- DE-A- 3 420 222
- DE-A- 3 522 922
- US-A- 4 067 479

## Beschreibung

Die Erfindung richtet sich auf eine Vorrichtung der im kennzeichnenden Teil des Anspruches 1 angegebenen Gattung.

Es gibt eine Reihe von Zweikomponentensystemen, bei denen zwei flüssige Komponenten durch direkte Reaktion miteinander aufschäumen und dann ggf. im aufgeschäumten Zustand aushärten, wie dies bei Polyol und Isocyanat der Fall ist. Es gibt aber auch eine Reihe von anderen Zweikomponentensystemen, bei denen es gewünscht wird, beide Komponenten erst am Ort des Ge- bzw. Verbrauches zu mischen, wie z.B. Mineralöl und HFD. Geräte, die zur Lösung dieser Probleme bereits bekannt sind, z.B. die Zuführmittel der Kunststoffkomponenten zu Spritzmaschinen oder dgl., sind in der Regel sehr aufwendig. Es müssen besondere Steuerungsmaßnahmen getroffen werden, um ein frühzeitiges Vermischen zu vermeiden und dgl. mehr. Aus der DE-A 35 22 922 ist eine Gießanlage für die Verarbeitung eines Zweikomponentengießharzes bekannt, bei der in einem Behälter in jedem von zwei vorgesehenen Vorratsbehältern eine Umwälzeinrichtung vorgesehen ist mit je einer Kolben-Dosierpumpe, mit deren Hilfe die Gießharzkomponenten einem Mischer zugeführt werden können. Die bekannte Lösung ist technisch und steuerungsmäßig vergleichsweise aufwendig. Zweikomponentenmischsysteme sind auch in der DE-A 34 20 222 oder der US 4,067,479 beschrieben, die technisch zum Teil noch aufwendiger ausgebildet sind.

Ein besonderes Problem stellt sich bei der Verarbeitung derartiger Materialien im Zuge des Grubenausbaues unter Tage, da hier nicht nur die Schwierigkeiten der beiden zu mischenden Komponenten, wie überall auch auftreten, sondern die Besonderheiten des Bergbaues mitberücksichtigt werden müssen. So muß eine derartige Einrichtung möglichst wartungsfrei sein, sie muß leicht zu bedienen, leicht zu befüllen, leicht zu reinigen und insbesondere auch leicht zu transportieren sein, elektrische Systeme sollten möglichst vermieden werden und dgl. mehr.

Aufgabe der Erfindung ist die Schaffung einer Lösung, mit der eine Vorrichtung der eingangs bezeichneten Art in ihrer Einteilung vereinfacht ausgebildet ist, die leicht zu transportieren, zu reinigen und insbesondere auch zu warten und zu steuern ist, wobei sie insbesondere auch zum Gebrauch unter Tage geeignet sein soll.

Diese Aufgabe wird gemäß der Erfindung dadurch gelöst, daß die beiden Pumpen als Radialkolbenpumpen für je eine der Komponenten in einem gemeinsamen Rahmen ausgebildet sind mit einem dazu einachsigen Antriebsmotor, wobei die Pumpen mit dem Motor an einem gemeinsamen Traggestell unter Zwischenschaltung einer Kupplung im oberen, mittleren Teil der Vorrichtung angeordnet sind.

Mit der Erfindung werden eine Reihe von ganz erheblichen Vorteilen erreicht. So bilden Radialkolbenpumpen sehr vorteilhafte Förderaggregate mit hohen Standzeiten, d.h. sehr großen Wartungsintervallen, mit der Möglichkeit des Nachjustierens und dgl. mehr. So ist ein niedriger Geräuschpegel auch bei hohen Drücken möglich, die Pumpen sind im wesentlichen schmutzunempfindlich, es kommt zu geringen Pulsationen im Förderstrom und sofort.

Die besondere Zuordnung zwischen Vorratsbehälter und jeweiliger Pumpe ermöglicht es, die Pumpen ständig mit dem zu fördernden Medium während des Betriebes gefüllt zu halten bzw. bei Beginn eines Füllvorganges zu einer natürlichen Entlüftung zu kommen, was bei den hier zu fördernden Medien von besonderer Wichtigkeit ist. So kann auch erreicht werden, daß es nie zu einer unbeabsichtigten Entleerung der Pumpen kommt, da die geodätische Aufstellung des Vorratsbehälters eine leichte Abschaltsteuerung mit minimalem Füllstand möglich macht.

Darüber hinaus wird durch die Anordnung von Motor und Pumpen die Montage erleichtert und ggf. auch bei einer Wartung ein Auswechseln der Aggregate in sehr vorteilhafter Weise.

In Ausgestaltung sieht die Erfindung vor, daß der Antrieb der beiden Radialkolbenpumpen von einem Hydraulikmotor gebildet ist. Es hat sich gezeigt, daß mit dieser Maßnahme eine starke Vereinfachung des gesamten Pumpaggregates möglich wird, insbesondere eignet sich ein solches Pumpenaggregat in hervorragender Weise für den Einsatz unter Tage, da elektrische Elemente im wesentlichen entbehrlich sind.

Eine Besonderheit der Erfindung liegt in Ausgestaltung darin, daß der Hydraulikmotor und die Pumpen von im wesentlichen gleichen Bauelementen gebildet sind, d.h. der Hydraulikmotor ist im wesentlichen gleich gestaltet. Wie die Radialkolbenpumpen mit umgekehrter Beaufschlagung für die Herstellung bedeutet dies eine besondere Wirtschaftlichkeit, da bei drei notwendigen Aggregaten diese im wesentlichen identisch sind, dies vereinfacht nicht nur die Montage, sondern insbesondere auch die Vorratshaltung bei Ersatzteilen und dgl. mehr. Die Vorteile der Radialkolbenpumpen gelten in gleicher Weise für den entsprechend ausgebildeten Hydraulikmotor, d.h. insbesondere was die Schmutzunempfindlichkeit und die Werkstoffpaarungen mit Nachstellwirkung bei Verschleiß von Dichtflächen und dgl. angeht.

Um die Handhabung der Gesamtvorrichtung zu erleichtern, ist vorgesehen, daß die Vorratsbehälter auf einem gemeinsamen Grundrahmen unter Zwischenlagerung der Antriebs-/Radialkolbeneinheit in ihrer Mitte angeordnet sind. Damit wir die Vorrichtung zu einem einfach zu handhabenden Gesamtelement.

Um eine Fehlbedienung, insbesondere einen Austausch der zu fördernden Aggregate zwischen den beiden Pumpen zu verhindern, was zwangsläufig bei dem hier in Rede stehenden Medium zu einer Zerstörung der Aggregate führen würde, ist vorgesehen, daß die Druckstutzen der Pumpen und die jeweils zugehörigen Leitungen zur Zapfstelle unterschiedlich dimensioniert ausgebildet sind.

Um ein Verwechseln innerhalb der Vorrichtung zu verhindern, kann auch vorgesehen sein, daß die Saugstutzen an den Pumpen unterschiedlich angeordnet sind, insbesondere was ihre Lage relativ zu den Vorratsbehältern angeht.

Zweckmäßig ist es, wenn die Steuerung von Pumpen und/oder Antrieb hydraulisch erfolgt, wie dies die Erfindung ebenfalls vorsieht.

Weitere Vorteile, Einzelheiten und Merkmale der Erfindung 4rgeben sich aufgrund der nachfolgenden Beschreibung sowie aufgrund der Zeichnung, diese zeigt in
- Fig. 1: eine Seitenansicht der Vorrichtung in vereinfachter Darstellung,
- Fig. 2: eine Aufsicht gemäß Pfeil II in Fig. 1,
- Fig. 3: einen Teilausschnitt in vergrößerter Darstellung eines Teiles der Vorratsbehälter,
- Fig. 4: eine Seitenansicht des Pumpen-/Antriebsaggregates teilweise geschnitten,
- Fig. 5: eine Aufsicht auf das Aggregat gemäß Pfeil V in Fig. 4 und
- Fig. 6: ein hydraulisches Schaltbild von einer möglichen Steuerung der Vorrichtung.

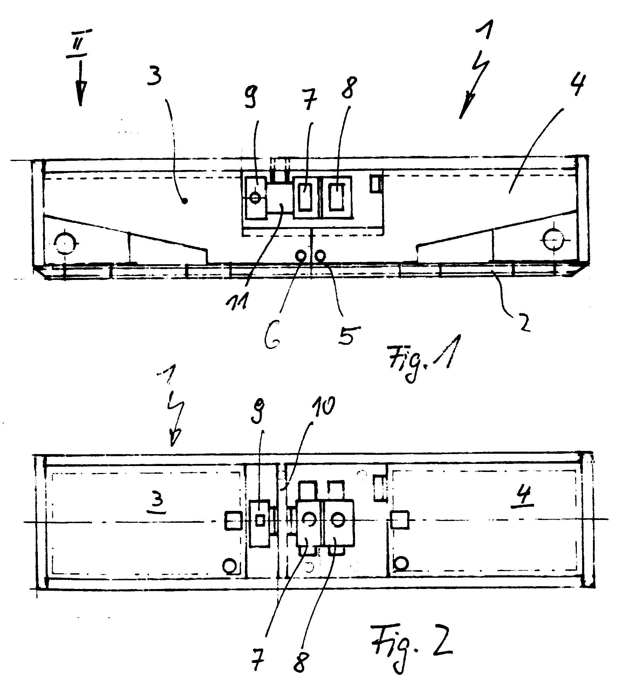

Die allgemein mit 1 bezeichnete Vorrichtung wird im wesentlichen von einem containerartigen Traggestell 2 gebildet, in welchem zwei Vorratsbehälter 3 und 4 für zu fördernde Medien spiegelsymmetrisch zueinander angeordnet sind. Die Behälter 3 und 4 weisen in der Vorrichtungsmitte ihre Ausflüsse 5 und 6 auf, die in Fig. 1 vereinfacht wiedergegebenen Radialkolbenpumpen 7 und 8 zugeordnet sind.

Koaxial zu den Radialkolbenpumpen 7 und 8 ist ein Hydraulikmotor 9 zu deren Antrieb angeordnet, wobei die Pumpen 7 und 8 mit dem Motor 9 an einem gemeinsamen Traggestell 10 unter Zwischenschaltung einer Kupplung 11 im oberen, mittleren Teil der Vorrichtung l angeordnet sind. Erkennbar können die Radialpumpen 7 und 8 ohne Hilfsmittel gefüllt bzw. entlüftet werden, da sie unter dem höchsten Füllniveau der Behälter 3 und 4 in der Vorrichtung 1 angeordnet sind.

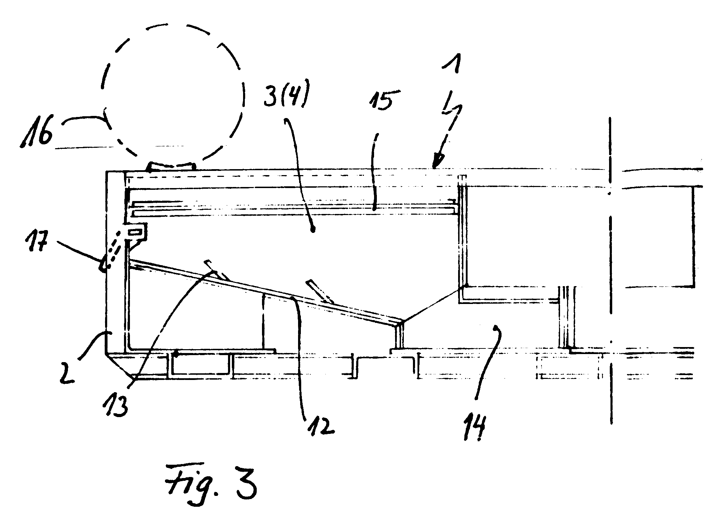

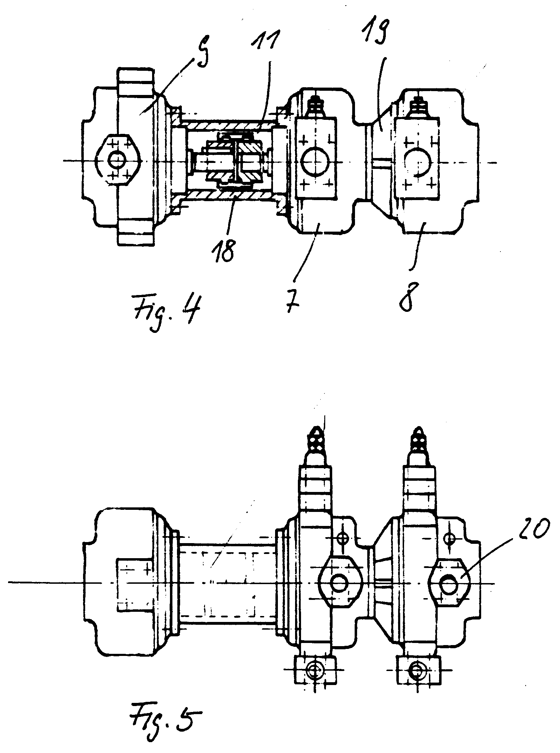

Aus Fig. 3 ist ersichtlich, wie Behälter 3 bzw. 4 speziell gestaltet sind. Die Behälter weisen einen schrägen Ablaufboden 12 auf mit schräg gestellten Gitterrosten 13 zum Auffang evtl. Verunreinigungen. Der schräge Boden 12 mündet in einen unteren Pumpensumpf 14, aus dem das entsprechende Medium herausgefördert wird. Im Bereich dieses Pumpensumpfes ist auch eine Schalteinrichtung vorgesehen, die die weitere Förderung dann unterbricht, wenn ein bestimmtes Füllniveau unterschritten wird.

Der Behälter 3 kann, wie angedeutet, mit einer Abdeckung 15 versehen sein, es kann auch eine Einrichtung zur Aufnahme von Nachfüllfässern dort vorgesehen sein, was gestrichelt angedeutet und mit 16 bezeichnet ist. Das containerartige Traggestell 2 ist seitlich mit Beschlägen 17 ausgerüstet, die dem Transport, insbesondere der Kranbarkeit dienen, der Container kann mit einem Fahrgestell ausgerüstet sein, sowohl was die Verfahrbarkeit auf bodenverlegten Schienen als auch in Form von Einschienenhängebahnen angeht, entsprechende Einrichtungen sind in den Figuren aber nicht dargestellt.

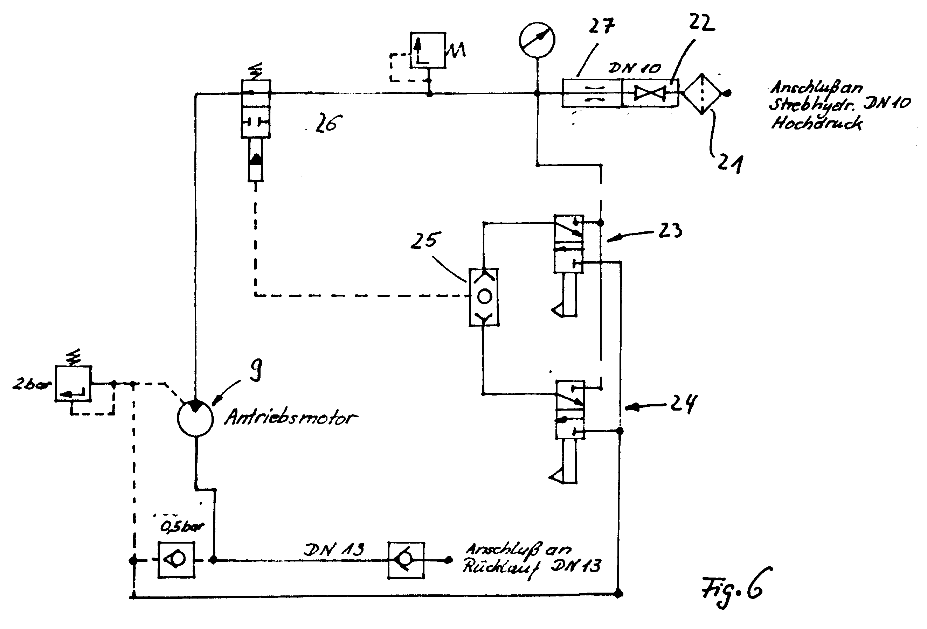

Bezugnehmend auf die Fig. 4 und 5 sei angemerkt, daß die beiden Radialkolbenpumpen 7 und 8 völlig baugleich gestaltet sein können, sie sind über ein Kupplungselement 11 mit dem Hydraulikmotor 9 verbunden, der im Prinzip wiederum völlig baugleich mit den Radialkolbenpumpen 7 und 8 ausgebildet ist. Das Kupplungselement 11 ist in Fig. 4 vereinfacht und geschnitten wiedergegeben, der Rohrstutzen 18 dient gleichzeitig zur Befestigung am Tragelement 10. Die beiden Radialkolbenpumpen 7 und 8 sind über einen Spezialflansch 19 miteinander verbunden.

Die Druckstutzen 20 der beiden Pumpen können so gestaltet sein, daß nur eine vorbestimmte Leitungsstärke dort angeschlossen werden kann, um ein Verwechseln der Anschlüsse zu vermeiden, da bei gemischter Füllung der Pumpen durch unterschiedlichen Medien je nach Art der Medien die Pumpen sofort zerstört würden.

Die Motorsteuerung ergibt sich aus Fig. 6, kurz beschrieben hier die folgende Funktionsweise:
Beim nicht näher dargestellten Hydrauliksystem wird die Steuerung über einen Filter 21 abgeschottet, zur Inbetriebnahme ist ein Absperrhahn 22 vorgesehen. Wie weiter oben bereits erwähnt ist die Lage der Radialpumpen 7 und 8 so gewählt, daß bei vollen Behältern 3 und 4 die Pumpen selbst entlüften und gefüllt vorliegen, dieser Zustand wird über die Überniveauüberwachungsventile 23 und 24 überprüft bzw. gesteuert. Soll der Antriebsmotor 9 anlaufen, darf beispielsweise das von den Niveauüberwachungsventilen 23 und 24 bzw. von einem Wechselventil 25 überwachte Abschaltventil 26 nicht geschlossen sein.

Über eine Drossel 27 kann das System im Druck eingestellt werden.

Mit der Erfindung wird erreicht, daß nach Anschluß und Einschalten der Einrichtung eines Hydrauliksystems unter Tage der Benutzer sofort zu arbeiten beginnen kann, ohne daß es weiterer Hilfestellungen bedarf.

## Patentansprüche

1. Vorrichtung (1) zum Lagern und Fördern zweier erst bei bestimmungsgemäßem Endverbrauch zu mischender Komponenten, wie Polyol und Isocyanat, insbesondere zum Gebrauch unter Tage, mit je einem Vorratsbehälter (3 bzw. 4) für jede Komponente und je einer mit jedem Vorratsbehälter in der Weise zugeordneten Pumpe, daß die Pumpen aufgrund natürlichen Gefälles mit der zu fördernden jeweiligen Komponente füllbar sind,
dadurch gekennzeichnet,
daß die beiden Pumpen als Radialkolbenpumpen (7,8) für je eine der Komponenten in einem gemeinsamen Rahmen (2) ausgebildet sind mit einem dazu einachsigen Antriebsmotor (9), wobei die Pumpen (7,8) mit dem Motor (9) an einem gemeinsamen Traggestell (10) unter Zwischenschaltung einer Kupplung (11) im oberen, mittleren Teil der Vorrichtung (1) angeordnet sind.

2. Vorrichtung nach Anspruch 1,
dadurch gekennzeichnet,
daß der Antrieb (9) der beiden Radialkolbenpumpen (7,8) von einem Hydraulikmotor gebildet ist.

3. Vorrichtung nach Anspruch 1 oder 2,
dadurch gekennzeichnet,
daß der Hydraulikmotor (9) und die Pumpen (7,8) von im wesentlichen gleichen Bauelementen gebildet sind.

4. Vorrichtung nach einem der vorangehenden Ansprüche,
dadurch gekennzeichnet,
daß die Vorratsbehälter (3,4) auf einem gemeinsamen Grundrahmen (2) unter Zwischenlagerung der Antriebs/Radialkolbeneinheit (8-11) in ihrer Mitte angeordnet sind.

5. Vorrichtung nach einem der vorangehenden Ansprüche,
dadurch gekennzeichnet,
daß zur Verhinderung von Fehlbeaufschlagung die Ansaugstutzen der Pumpen (7,8) und die jeweils zugehörigen Leitungen zum Vorratsbehälter (3,4) unterschiedlich dimensioniert ausgebildet sind.

6. Vorrichtung nach einem der vorangehenden Ansprüche,
dadurch gekennzeichnet,
daß die Steuerung von Pumpen (7,8) und/oder Antrieb (9) hydraulisch erfolgt.

## Claims

1. Apparatus (1) for storing and conveying two components which are only to be mixed upon prescribed ultimate use, such as polyol and isocyanate, in particular for use underground, comprising a respective storage container (3 and 4) for each component and a respective pump associated with each storage container in such a way that the pumps can be filled with the respective component to be conveyed by virtue of natural fall, characterised in that the two pumps are in the form of radial piston pumps (7, 8) for respective ones of the components in a common frame (2), with a drive motor (9) which is uniaxial relative thereto, wherein the pumps (7, 8) with the motor (9) are arranged on a common support structure (10) with the interposition of a coupling (11) in the upper middle part of the apparatus (1).

2. Apparatus according to claim 1 characterised in that the drive (9) of the two radial piston pumps (7, 8) is formed by a hydraulic motor.

3. Apparatus according to claim 1 or claim 2 characterised in that the hydraulic motor (9) and the pumps (7, 8) are formed by substantially identical components.

4. Apparatus according to one of the preceding claims characterised in that the storage containers (3, 4) are arranged on a common base frame (2) with the interposition of the drive/radial piston unit (8-11) in the middle thereof.

5. Apparatus according to one of the preceding claims characterised in that to prevent malfunctioning the intake connections of the pumps (7, 8) and the respectively associated lines to the storage container (3, 4) are of different dimensions.

6. Apparatus according to one of the preceding claims characterised in that the control of pumps (7, 8) and/or drive (9) is effected hydraulically.

## Revendications

1. Dispositif (1) pour entreposer et convoyer deux composants destinés à être mélangés seulement lors de l'utilisation finale, tels que le polyol et l'isocyanate, notamment pour une utilisation souterraine, comprenant un réservoir de stockage respectif (3 ou 4) pour chaque composant et une pompe associée à chaque réservoir de stockage de manière que les pompes puissent être remplies avec le composant respectif à convoyer en raison de la déclivité naturelle,
caractérisé en ce que les deux pompes sont constituées sous forme de pompes à pistons radiaux (7, 8) pour chacun des composants dans un châssis commun (2) et comprennent un moteur d'entraînement (9) à axe unique, les pompes (7, 8) étant montées avec le moteur (9) sur un châssis porteur commun (10) avec interposition d'un accouplement (11) dans la partie supérieure centrale du dispositif (1).

2. Dispositif selon la revendication 1,
caractérisé en ce que l'entraînement (9) des deux pompes à pistons radiaux (7, 8) est constitué par un moteur hydraulique.

3. Dispositif selon la revendication 1 ou 2,
caractérisé en ce que le moteur hydraulique (9) et les pompes (7, 8) sont constitués par des éléments sensiblement similaires.

4. Dispositif selon l'une quelconque des revendications précédentes, caractérisé en ce que les réservoirs de stockage (3, 4) sont disposés sur un châssis de base commun (2) avec interposition en leur centre de l'ensemble d'entraînement/pistons radiaux (8-11).

5. Dispositif selon l'une quelconque des revendications précédentes,
caractérisé en ce que pour éviter une manoeuvre erronée, les tubulures d'aspiration des pompes (7, 8) et les conduites associées allant aux réservoirs de stockage associés (3, 4) sont de dimensions différentes.

6. Dispositif selon l'une quelconque des revendications précédentes,
caractérisé en ce que la commande des pompes (7, 8) et/ou de l'entraînement (9) est hydraulique.
